# EUROPEAN PATENT SPECIFICATION

(11) **EP 0 527 221 B1**
(45) Date of publication and mention of the grant of the patent: **03.09.1997**
(21) Application number: 92907694.1
(22) Date of filing: 03.03.1992
(51) Int. Cl.: C08F 2/38, C08F 4/602, C08F 210/00

(54) **PROCESS FOR PREPARING POLYOLEFINS HAVING A BIMODAL MOLECULAR WEIGHT DISTRIBUTION**
VERFAHREN ZUR HERSTELLUNG VON POLYOLEFINEN MIT BIMODALER MOLEKULARGEWICHTSVERTEILUNG
PROCEDE DE PREPARATION DE POLYOLEFINES PRESENTANT UNE REPARTITION BIMODALE DU POIDS MOLECULAIRE

(30) Priority: 04.03.1991 US 664158; 21.02.1992 US 839843
(43) Date of publication of application: 17.02.1993
(73) Proprietor: PHILLIPS PETROLEUM COMPANY, Bartlesville Oklahoma 74004 (US)
(72) Inventor: STRICKLEN, Phil, Marvin, Bartlesville, OK 74006 (US)
(74) Representative: Dost, Wolfgang, Dr.rer.nat., Dipl.-Chem.
(86) International application number: US9201820
(87) International publication number: WO9215619

(56) References cited:
- EP-A- 0 416 815
- EP-A- 0 447 035
- US-A- 4 530 914
- US-A- 4 701 432
- US-A- 4 937 299
- US-A- 4 939 217
- US-A- 5 032 562

## Description

This invention relates to a process for preparing polyolefins having a bimodal molecular weight distribution.

Polyolefins which have a bimodal molecular weight distribution have advantages over typical polyolefins which lack such bimodal molecular weight distributions. For example, while polyolefins can be made into articles by a number of various methods, polyolefins having a bimodal molecular weight distribution can be processed more easily. That is, they can be processed at a faster rate and with a lower energy requirement. Additionally, these polymers evidence a reduced melt flow perturbation and are thus preferred for such applications as high strength films. There are several known methods of producing polyolefins having a bimodal molecular weight distribution. However, each method has its own disadvantages. For example, polyolefins having a bimodal molecular weight distribution can be made by employing two distinct and separate catalysts in the same reactor. However, this process is subject to possible separation of the polyolefin mixture into nonhomogenous phases during storage and transfer of the polymer.

US-A-4,530,914 discloses a method of producing polyethylene having a broad molecular weight distribution or a multimodal molecular weight distribution. This polyethylene is obtained directly from a single polymerization process in the presence of a catalyst system comprising aluminoxane and two or more metallocenes wherein each metallocene has a different propagation and termination rate. However, there are certain limitations to these types of methods for preparing bimodal molecular weight distribution polymers. For example, at certain ratios and in certain polymerization processes, even catalysts having aluminoxane and two different metallocenes can produce polyolefins which have a monomodal molecular weight distribution. Even under ideal conditions, if the bimodal molecular weight distribution of the polyolefin needs to be changed, a new catalyst needs to be made at different metallocene ratios.

US-A-4937299 relates to a homogeneous catalyst system for the simultaneous production of a polymer blend in a single polymerization reactor of two or more polymers comprising homopolyethylene and an ethylene-alpha-olefin copolymer, said catalyst may be a metallocene and aluminoxane (claim 2), and a process for producing a blend of two or more polymers comprising polyethylene and ethylene-alpha-olefin copolymer by using the catalyst system disclosed therein. No hydrogen in used within said process (see examples).

EP-A-0 447 035 published on 18.09.91, discloses a multistage preparation of an ethylene polymer composition, using an olefin polymerisation catalyst comprising a transition metal compound and an organoaluminium oxy compound. There is no disclosure of a mode with a high density of greater than or equal to 0.94 g per cm³.

EP-A-0041796 relates to a process for multi-step gas-phase polymerization of olefins, wherein olefins are polymerized in the gaseous phase in at least two independent gas-phase polymerization zones, in the presence of a catalyst composed of a transmission metal catalyst component and an organmetallic compound of a metal of groups I to III of the periodic table, in the co-presence of hydrogen gas. According to said process both steps are carried out in the presence of hydrogen.

US-A-4939217 relates to a process for producing polyolefins having bimodal molecular weight distribution, wherein at least one olefin is polymerized in the presence of an amount of hydrogen and a hydrogeneous catalyst system comprising a metallocene and an aluminoxane, as defined therein, wherein the initial amount of hydrogen, metallocene and aluminoxane in said polymerization zone is sufficient to produce a polyolefin having a bimodal molecular weight distribution. Also according to said reference hydrogen is present throughout the whole polymerization.

One of the main applications of polyolefins is in the area of high strength films. It is highly desirable when making a polyolefin for high strength film applications that it be composed of two major components. The first component should be a high molecular weight component which has low crystallinity. The second component should be a low molecular weight component which has high crystallinity. The combination of these two components can produce a film with superior properties and thus would be both valuable scientifically and economically.

In accordance with the present invention, a two-step process for producing polyolefins having a bimodal molecular weight distribution is provided.

In particular, the present invention relates to a process for producing polyolefins having a bimodal molecular distribution which comprises:
(A) contacting under polymerization conditions
   (1) at least two different alpha-olefins; with
   (2) a catalyst system comprising
      (a) at least one aluminoxane compound,
         and
      (b) at least one metallocene compound selected from mono, di, or tricyclopentadienyl, a substituted cyclopentadienyl, or a mixture thereof, of a metal which is titanium, vanadium, chromium, zirconium, niobium, molybdenum, hafnium, tantalum, tungsten, or a mixture thereof, provided that, at least one metallocene compound utilized has the ability to form essentially a homopolymer in the presence of hydrogen with said alpha-olefins and furthermore has the ability to form essentially a copolymer in the absence of hydrogen with said alpha-olefins and has a different termination rate constant with respect to olefin polymerization in the presence of hydrogen;
         to form a first polymerization mixture comprising a low crystallinity, high molecular weight copolymer;
         followed by
(B) contacting under polymerization conditions
   (1) said first polymerization mixture with
   (2) hydrogen;
      to form a second polymerization mixture comprising a high crystallinity, low molecular weight homopolymer, and said copolymer
      characterized in that the process is carried out such that said copolymer has a low density of less than 0.94 g per cm³ and said homopolymer obtained in the presence of hydrogen has a high density of greater than or equal to 0.94 g per cm³.

According to this invention, if said metal of the metallocene is titanium, then a metallocene of at least one other of said metals is present. The first polymerization mixture generally comprises a low crystallinity, high molecular weight, copolymer, unreacted monomer, unreacted comonomer, and catalyst. The first polymerization mixture is contacted, under polymerization conditions, with hydrogen (and optionally additional alpha-olefin preferably ethylene such that a second polymerization mixture is formed which generally comprises a low crystallinity, high molecular weight copolymer, and a high crystallinity, low molecular weight homopolymer.

### DETAILED DESCRIPTION OF THE INVENTION

### Catalyst System

Aluminoxanes are known in the art and are polymeric aluminum compounds which can be represented by the general formula (R-Al-O)ₙ which is a cyclic compound and R(R-Al-O-)ₙAlR₂, which is a linear compound. In the general formula, R is a C₁-C₁₀, preferably a C₁-C₅ alkyl group such as methyl, ethyl, propyl, butyl, and pentyl, most preferably, R is methyl, and n is preferably an integer of 1 to 20. Preferred is methyl aluminoxane.

It is known to prepare aluminoxanes by saturating an organic solvent with water which then reacts with the aluminum alkyl and forms aluminoxane. However, the water molecules in this process tend to cluster, which can over-hydrolyze the alkyl aluminum, forming inactive Al₂O₃ thereby wasting reactants. A preferred method of adding water to hydrolyze the aluminum alkyl is to bubble an inert gas, such as nitrogen, saturated with water through a solution of the aluminum alkyl. The amount of water and the rate at which it is added can be controlled by the water temperature and the inert gas flow rate. The water is well dispersed thereby minimizing the formation of alumina (Al₂O₃). In this preferred process of making the catalyst there are fewer steps and no by-products produced that need to be removed before the aluminoxane can be used and furthermore the aluminum alkyl reactant is not wasted in the formation of alumina.

According to the invention, it is important that the metallocene have a different termination rate constant with respect to olefin polymerization in the presence of hydrogen. Such rate constants can be determined by one of ordinary skill in the art. It is essential in this invention, that the metallocene chosen, when in the presence of hydrogen, makes essentially homopolymer whereas in the absence of hydrogen, this same metallocene essentially makes a copolymer. In general, the metallocenes employed in accordance with this invention are represented by the general formula (C₅R'_{ₘ})_{ₚ} R"_{ₛ}(C₅R'_{ₘ})MeQ_{3₋ₚ} and R"_{ₛ}(C₅R'_{ₘ})₂MeQ' wherein: each (C₅R'_{ₘ}) is a cyclopentadienyl or a substituted cyclopentadienyl group; each R' can be independently selected from the group consisting of hydrogen and hydrocarbyl radicals wherein the hydrocarbyl radicals are selected from the group consisting of alkyl, alkenyl, aryl, alkylaryl, or arylalkyl radicals which have from 1 to 20 carbon atoms per radical, additionally, the R' can be independently selected from adjacent carbon atoms which are joined together to form a C₄-C₆ ring; each R" is selected from the group consisting of C₁-C₄ alkylene radical, dialkyl germanium, dialkyl silicone, alkyl phosphine, or amine radical which bridges two (C₅R'_{ₘ}) rings; each Q is independently selected from the group consisting of halogens, or hydrocarbon radicals selected from the group consisting of aryl, alkyl, alkenyl, alkylaryl, or arylalkyl radicals each having from 1 to 20 carbon atoms; each Q' is an alkylidene radical having from 1 to 20 carbon atoms; Me is a transition metal selected from the group consisting of titanium, vanadium, chromium, zirconium, niobium, molybdenum, hafnium, tantalum, tungsten; s is 0 or 1; p is o, 1 or 2; when p is 0, s is 0; m is 4 when s is 1 and m is 5 when s is 0.

It is preferred that the metallocene be a cyclopentadienyl of zirconium. Cyclopentadienyl complexes of zirconium form very effective and active catalysts with aluminoxanes. The dimethyldicyclopentadienyl complexes of zirconium are more preferred due to their ease of preparation and the fact that they are free from chlorides, making the catalyst system totally halogen free. Furthermore, the zirconium catalyst is more susceptible to the presence of hydrogen than other similar metallocenes.
Specifically, the zirconium catalyst in the presence of hydrogen and two different monomers will tend to make a homopolymer of one of the monomers, whereas the same catalyst in the absence of hydrogen and in the presence of the same two monomers will tend to make a copolymer of these two monomers. In contrast, titanium is unaffected by the presence or absence of hydrogen in this polymerization process. Thus, if a titanium metallocene is used it must be used in combination with a metallocene of one of the other metals, preferably zirconium.

It is preferred that the metallocene is contacted with a soluble aluminoxane to form a catalyst. It is also possible, and even more preferred, to react a reactant mixture of the metallocene with the aluminum alkyl in a hydrocarbon solvent followed by bubbling a wet inert gas through the mixture to hydrolyze the aluminum alkyl thereby producing a polymerization catalyst.

If the hydrocarbon is an aliphatic hydrocarbon, the aluminoxane as it is formed will precipitate. It is preferred that if the aluminoxane is prepared prior to the addition of the metallocene that the hydrocarbon solvent be aromatic so that the aluminoxane will remain in solution until after reacting with the metallocene. If, however, the metallocene is present with the aluminum alkyl prior to the formation of aluminoxane it is preferred that the hydrocarbon solvent be an aliphatic hydrocarbon so that upon formation of the aluminoxane, the catalyst precipitates.

The most preferred process of preparing the catalyst essentially comprises: bubbling a wet inert gas through a mixture of (a) an aliphatic hydrocarbon solvent; (b) an amount of an aluminum compound of the formula AlR₃ wherein each R can be the same or different and is selected from alkyl groups having from 1 to 10 carbon atoms; and (c) cyclopentadienyls and substituted cyclopentadienyls of a transition metal which is sensitive to the presence of hydrogen in this polymerization process; thereby producing a solid melt on aluminoxane polymerization catalyst wherein the temperature and pressure of said mixture is sufficient to maintain said hydrocarbon solvent in liquid phase and produce said catalyst.

In the process of preparing the catalyst it is preferred, but not required, that the inert gas be saturated with water. When the particular inert gas is saturated with water it is easier to calculate how much water has reacted with the aluminum alkyl. It is important to know how much water has reacted so that the aluminum alkyl is not converted to alumina by having too much water present.

It is preferred that the inert gas be bubbled through the water at a temperature, pressure, and rate to essentially saturate the inert gas with water which is followed by bubbling this wet inert gas through the hydrocarbon solvent, containing the reactants, at a temperature, pressure, and rate sufficient to react the water in the inert gas with the aluminum alkyl compound. It is preferred that the molar ratio of water to aluminum alkyl, that is bubbled through the hydrocarbon solvent in the inert gas, be within the range of 0.01:1 to 1.4:1, more preferably within the range of 0.5:1 to 1:1. Furthermore, the inert gas can be any non-reactive gas, such as nitrogen or the noble gases in group VIII of the Periodic Table of the elements. Nitrogen is most preferred due to its availability. Additionally, it is preferred that the weight ratio of aluminum alkyl to hydrocarbon be within the range of 1:1 to 1:100, preferably 1:2 to 1:50, and most preferably 1:4 to 1:10. Lastly, it is preferred that the hydrocarbon be selected from normal and cyclo alkanes having from 5 to 10 carbon atoms, n-hexane being preferred.

In this invention, it is preferred that the aluminum alkyl (AlR₃) be an aluminum alkyl wherein each R is selected from alkyl groups having 1 to 5 carbon atoms. The most preferred aluminum alkyl being trimethyl aluminum. Furthermore,it is preferred that the aluminoxane support/cocatalyst make up the majority of the catalyst. Preferably the weight ratio of total metallocenes to aluminoxane is within the range of 1:5 to 1:10⁸, preferably 1:10 to 1:10⁵, and more preferably 1:20 to 1:10³.

### Reaction Conditions

According to the invention it is preferred that the polymerization process be conducted under slurry phase polymerization conditions. It is preferred that the slurry phase polymerization conditions, in both polymerization steps, comprise: a polymerization temperature from 80°C. to 110°C.; a polymerization pressure from 17.5·10⁵ to 49·10⁵ Pa (250 psia to 700 psia), preferably it is from 28·10⁵ to 42·10⁵ Pa (400 psia to 600 psia), and most preferably it is from 35·10⁵ to 39.55·10⁵ Pa (500 to 565 psia); a polymerization time from 1 minute to six hours; preferably from 10 minutes to two hours, and most preferably from 20 minutes to 1 hour.

In the process of the present invention it is preferred that the weight ratio of diluent to catalyst be within the range of 500:1 to 1,000,000:1, preferably 1,000:1 to 100,000:1, and more preferably 2,000:1 to 10,000:1. It is preferred that the polymerization reaction be run in a diluent at a temperature at which the polymer remains a solid in the diluent. Diluents include, for example, isobutane, n-hexane, n-heptane, and methylcyclohexane. The preferred diluent is isobutane. These conditions also apply to both steps.

The monomers that are used in the process of the present invention are preferably selected from alpha olefins, preferably alpha-olefins having from 2 to 10 carbon atoms. More preferably, these alpha-olefins are selected from the group consisting of ethylene, propylene, 1-hexene, and mixtures thereof, ethylene being the most preferred. It is preferred that the comonomer for the production of the copolymer be an alpha-olefin which has from 3 to 10 carbon atoms. More preferably, the comonomer is selected from the group of 1-butene, 1-pentene, 1-hexene, 1-heptene, 1-octene, or mixtures thereof. Most preferably the comonomer is 1-hexene. The weight ratio of monomer to comonomer, in the first step, should be in the range of 95 to 5, for example, when producing a ethylene-1-hexene copolymer the ratio of ethylene to 1-hexene should be 95 parts by weight ethylene to 5 parts by weight 1-hexene based on 100 total parts of monomer and comonomer. More preferably, the ratio is 99 parts by weight monomer to 1 part by weight comonomer and most preferably it is 99.4 parts by weight monomer to .6 parts by weight comonomer. These ratios tend to give the optimum productivity for producing copolymers. Generally, the entire amount of comonomer is added during the first polymerization, but in any event the above ratio represent the total amount.

The monomers used in this invention include ethylene, propylene, 1-butene, 3-methyl-1-butene, 1-pentene; 3-methyl-1-pentene, 4-methyl-1-pentene, 1-hexene, 3-ethyl-1-hexene, 1-heptene, 1-octene, 1-decene, and mixtures thereof. The comonomers used in this invention include propylene, 1-butene, 3-methyl-1-butene, 1-pentene, 3-methyl-1-pentene, 4-methyl-1-pentene, 1-hexene, 3-ethyl-1-hexene, 1-heptene, 1-octene, 1-decene, and mixtures thereof.

According to the invention it is preferred that the relative amounts of hydrogen introduced in the second polymerization step be within the range of 0.001 to 15 mole percent hydrogen and 99.999 to 85 mole percent olefin based on total hydrogen and monomer present, preferably 1 to 10 mole percent hydrogen and 99 to 90 mole percent monomer. The amounts of 4 mole percent hydrogen and 96 mole percent monomer being most preferred because the polymer produced by this mixture is of the appropriate molecular weight to give the most desired polymer properties.

### Process of the Invention

The catalyst system and two different monomers are placed in a polymerization zone under polymerization conditions. It is important that there be essentially no hydrogen present during the first polymerization step. This is to enhance the polymerization of a low crystallinity, high molecular weight, copolymer. The resulting polymerized mixture comprising copolymer, unreacted monomer, unreacted comonomer, catalyst and diluent is then contacted with hydrogen in the second polymerization step and allowed to polymerize further. This facilitates the production of a high crystallinity, low molecular weight, homopolymer. This provides an essentially homogeneous product which has superior properties for such applications as film. The second polymerization step can be completed in the same zone by adding hydrogen in a batch type operation, or the polymerization mixture resulting from the first polymerization step can be introduced into a second polymerization zone under either batch or continuous conditions.

Reference to first and second polymerization steps does not exclude the possibility of three or more polymerization steps.

For the purposes of this application, the term "low crystallinity" means that the amount of crystallinity, as derived from density data collected in accordance with ASTM-D-1505, is less than or equal to 60%. The term "high crystallinity", for the purposes of this application, means that the amount of crystallinity, as derived from density data collected in accordance with ASTM-D-1505, is greater than 60%. Also for the purposes of this application, the term "high density", in relation to polyethylene, means a density greater than or equal to 0.94 grams per cubic centimeter. Additionally, the term "low density", in relation to polyethylene, means a density less than 0.94 grams per cubic centimeter. The term "high molecular weight", for the purposes of this application means a weight average molecular weight equal to or greater than 100,000, as determined from size exclusion chromatography. The term "low molecular weight", for the purposes of this application means a weight average molecular weight less than 100,000, as determined from size exclusion chromatography.

### EXAMPLES

These examples are provided to further assist a person skilled in the art with understanding this invention. The particular reactants, and conditions, are intended to be merely illustrative of this invention.

The catalyst was prepared in the following manner. To a 250 ml crown capped bottle the following were added, 0.198 grams of Cp₂Zr(CH₃)₂ (bis(cyclopentadienyl) dimethyl zirconium), and 0.84 grams of Cp₂Ti(CH₃)₂ (bis(cyclopentadienyl) dimethyl titanium), dissolved in 12 mls of toluene. The solution was diluted to 100 mls with n-hexane and 1.69 g trimethyl aluminum was added as a 25 weight percent solution in n-hexane. Nitrogen was slowly bubbled through the solution with vigorous stirring. A precipitate gradually formed as the color changed from yellow green to a brick red. The solid was filtered in a dry box and washed with n-hexane.

### Run 1

To a 2-liter autoclave reactor the following was charged: 1) the catalyst made above; 2) 1-liter of isobutane; 3) 18 grams of 1-hexene. The reactor was then pressurized to 24.5·10⁵ Pa (350 psia) with ethylene. The temperature was raised to 90°C. and the reaction was allowed to continue for 100 minutes. During the polymerization an additional 4.33 grams of 1-hexene was added. The isobutene was flashed at the end of the production run and the polymer was recovered as a free flowing powder. The physical properties of the polymer are recorded in Table I.

### Run 2

Run 2 was conducted in the same manner as Run 1 except that 40 grams of 1-hexene was added at the beginning of the trial and 7.86 grams of 1-hexene was added during the run. However, in contrast to Run 1 this reaction was allowed to proceed for 120 minutes. The physical properties of this polymer are also recorded in Table I.

### Run 3

This polymerization was conducted in the same manner as Run 1 except 4.17 grams of hexene was added during the run and 14·10⁵ Pa (20 psia) of hydrogen was added at the beginning of the run. The run was allowed to proceed for 50 minutes before procedures for recovering the polymer were implemented. The physical properties of the polymer are recorded in Table I.

### Run 4

This polymerization was conducted as in Run 2 except that 14·10⁵ Pa (20 psia) of hydrogen was added at the beginning of the run. Additionally, the run time was only 70 minutes. The physical properties of this polymer are recorded in Table I also.

**TABLE I1**

| Run Number | Density | Melt Index | High Load Melt Index | Mₙ | M_{w} | HI |
|---|---|---|---|---|---|---|
| 1 | 0.9296 | 0.053 | 1.1 | 24,800 | 196,000 | 7.9 |
| 2 | 0.9259 | 0.12 | 2.7 | 29,720 | 172,910 | 5.8 |
| 3 | 0.9526 | 5.4 | 224 | 5,440 | 67,350 | 12.9 |
| 4 | 0.9519 | 3.5 | 211 | 5,140 | 70,980 | 13.8 |
| ¹The density was determined in accordance with ASTM D1505. The melt index values were determined by ASTM Standard D1238 Condition D. The high load melt index values were determined by ASTM Standard D1238 Condition F. The number average molecular weight (Mₙ), the weight average molecular weight (M_{w}), and the heterogeneity index (HI) were all determined by size exclusion chromatography (SEC). | | | | | | |

In Runs 1 and 2, no hydrogen was added to the reactor and a low crystallinity, high molecular weight, copolymer was produced. The low crystallinity in Runs 1 and 2 is evidenced by the low density of the polymer. In Runs 3 and 4, hydrogen was added to the reactor thus producing a high crystallinity, low molecular weight, polymer. The high crystallinity in Runs 3 and 4 is evidenced by the high density of the polymer. The high densities were achieved even though the same amount of comonomer was present in these runs as was present in runs 1 and 2 which produced low density polymer. Consequently, if these runs were performed sequentially, that is, the procedure in Run 1 was accomplished followed by the procedure in Run 3, a bimodal molecular weight distribution product having a high molecular weight, low crystallinity, copolymer and a low molecular weight, high crystallinity, homopolymer, would be produced and would provide a homogeneous blend of the two polymers.

## Claims

1. A process for producing polyolefins having a bimodal molecular distribution which comprises:
(A) contacting under polymerization conditions
(1) at least two different alpha-olefins; with
(2) a catalyst system comprising
(a) at least one aluminoxane compound,
and
(b) at least one metallocene compound selected from mono, di, or tri-cyclopentadienyl, a substituted cyclopentadienyl, or a mixture thereof, of a metal which is titanium, vanadium, chromium, zirconium, niobium, molybdenum, hafnium, tantalum, tungsten, or a mixture thereof, provided that, at least one metallocene compound utilized has the ability to form essentially a homopolymer in the presence of hydrogen with said alpha-olefins and furthermore has the ability to form essentially a copolymer in the absence of hydrogen with said alpha-olefins and has a different termination rate constant with respect to olefin polymerization in the presence of hydrogen;
to form a first polymerization mixture comprising a low crystallinity, high molecular weight copolymer;
followed by
(B) contacting under polymerization conditions
(1) said first polymerization mixture with
(2) hydrogen;
to form a second polymerization mixture comprising a high crystallinity, low molecular weight homopolymer, and said copolymer
characterized in that the process is carried out such that said copolymer has a low density of less than 0.94 g per cm³ and said homopolymer obtained in the presence of hydrogen has a high density of greater than or equal to 0.94 g per cm³.

2. A process according to claim 1, wherein said metallocene is of titanium and a metallocene of at least one other of said metals is present.

3. A process according to claim 1 or 2, wherein said polymerization conditions comprise slurry phase polymerization conditions.

4. A process according to claim 3, wherein said slurry phase polymerization conditions comprise a temperature of 80°C. to 110°C.

5. A process according to claim 3 or 4, wherein said slurry phase polymerization conditions comprise a pressure of 17.5·10⁵ to 49·10⁵ Pa (250 psia to 700 psia).

6. A process according to any one of claims 3 to 5, wherein said slurry phase polymerization conditions comprise a polymerization time of 1 minute to 6 hours.

7. A process according to any one of the preceding claims, wherein said at least two different alpha-olefins comprise at least two of ethylene, propylene, 1-butene, 3-methyl-1-butene, 1-pentene, 3-methyl-1-pentene, 4-methyl-1-pentene, 1-hexene, 3-ethyl-1-hexene, 1-heptene, 1-octene, and 1-decene.

8. A process according to claim 7, wherein said at least two different alpha-olefins are ethylene and 1-hexene.

9. A process according to claim 8, wherein the first polymerization mixture and the hydrogen are further contacted with additional ethylene.

10. A process according to any one of the preceding claims, wherein the aluminoxane compound is methyl aluminoxane.

11. A process according to any one of the preceding claims, wherein the metallocene compound comprises bis(cyclopentadienyl) dimethyl zirconium.

12. A process according to claim 11, wherein the metallocene compound further comprises bis(cyclopentadienyl) dimethyl titanium.

## Patentansprüche

1. Verfahren zur Herstellung von Polyolefinen mit bimodaler Molekulargewichtsverteilung, das folgendes umfaßt:
(A) Kontaktieren unter Polymerisationsbedingungen von
(1) mindestens zwei verschiedenen α-Olefinen; mit
(2) einem Katalysatorsystem, umfassend
(a) mindestens eine Aluminoxanverbindung und
(b) mindestens eine Metallocenverbindung, die unter Mono-, Di- oder Tricyclopentadienyl, einem substituierten Cyclopentadienyl oder einem Gemisch davon eines Metalls, bei dem es sich um Titan, Vanadium, Chrom, Zirkonium, Niob, Molybdän, Hafnium, Tantal, Wolfram oder ein Gemisch davon handelt, ausgewählt ist, mit der Maßgabe, daß mindestens eine der verwendeten Metallocenverbindungen dazu befähigt ist, in Gegenwart von Wasserstoff im wesentlichen ein Homopolymeres mit den α-Olefinen zu bilden, und ferner die Fähigkeit besitzt, in Abwesenheit von Wasserstoff im wesentlichen ein Copolymeres mit den α-Olefinen zu bilden, und in bezug auf die Olefinpolymerisation in Gegenwart von Wasserstoff eine unterschiedliche Konstante der Terminationsgeschwindigkeit aufweist;
unter Bildung eines ersten Polymerisationsgemisches mit einem Gehalt an einem niederkristallinen, hochmolekularen Copolymeren;
gefolgt von
(B) Kontaktieren unter Polymerisationsbedingungen
(1) des ersten Polymerisationsgemisches mit
(2) Wasserstoff;
unter Bildung eines zweiten Polymerisationsgemisches mit einem hochkristallinen, niedermolekularen Homopolymeren und dem Copolymeren,
dadurch gekennzeichnet, daß das Verfahren so durchgeführt wird, daß das Copolymere eine geringe Dichte von weniger als 0,94 g pro cm³ aufweist und das erhaltene Homopolymere in Gegenwart von Wasserstoff eine hohe Dichte von 0,94 g pro cm³ oder mehr aufweist.

2. Verfahren nach Anspruch 1, wobei es sich beim Metallocen um Titanmetallocen handelt und ein Metallocen von mindestens einem anderen Metall vorhanden ist.

3. Verfahren nach Anspruch 1 oder 2, wobei die Polymerisationsbedingungen Polymerisationsbedingungen in der Aufschlämmungsphase umfassen.

4. Verfahren nach Anspruch 3, wobei die Polymerisationsbedingungen in der Aufschlämmungsphase eine Temperatur von 80 bis 110°C umfassen.

5. Verfahren nach Anspruch 3 oder 4, wobei die Polymerisationsbedingungen in der Aufschlammungsphase einen Druck von 17,5 x 10⁵ bis 49 x 10⁵ Pa (250 bis 700 psia) umfassen.

6. Verfahren nach einem der Ansprüche 3 bis 5, wobei die Bedingungen in der Aufschlämmungsphase eine Polymerisationszeit von 1 Minute bis 6 Stunden umfassen.

7. Verfahren nach einem der vorstehenden Ansprüche, wobei die beiden verschiedenen α-Olefine mindestens zwei der Bestandteile Ethylen, Propylen, 1-Buten, 3-Methyl-1-buten, 1-Penten, 3-Methyl-1-penten, 4-Methyl-1-penten, 1-Hexen, 3-Ethyl-1-hexen, 1-Hepten, 1-Octen und 1-Decen umfassen.

8. Verfahren nach Anspruch 7, wobei es sich bei den mindestens zwei beiden unterschiedlichen α-Olefinen um Ethylen und 1-Hexen handelt.

9. Verfahren nach Anspruch 8, wobei das erste Polymerisationsgemisch und der Wasserstoff ferner mit zusätzlichem Ethylen in Kontakt gebracht werden.

10. Verfahren nach einem der vorstehenden Ansprüche, wobei die Aluminoxanverbindung Methylaluminoxan ist.

11. Verfahren nach einem der vorstehenden Ansprüche, wobei die Metallocenverbindung Bis-(cyclopentadienyl)-dimethylzirkonium umfaßt.

12. Verfahren nach Anspruch 11, wobei die Metallocenverbindung ferner Bis-(cyclopentadienyl)-dimethyltitan umfaßt.

## Revendications

1. Un procédé pour produire des polyoléfines ayant une répartition moléculaire bimodale qui consiste :
(A) à mettre en contact sous des conditions de polymérisation
(1) au moins deux α-oléfines différentes ;
avec
(2) un système de catalyseur comprenant
(a) au moins un composé aluminoxane,
et
(b) au moins un composé métallocène choisi parmi le mono, di, ou tri-cyclopentadiényle, un cyclopentadiényle substitué ou un mélange de ceux-ci d'un métal qui est le titane, le vanadium, le chrome, le zirconium, le niobium, le molybdène, l'hafnium, le tantale, le tungstène ou un de leur mélange à condition qu'au moins un composé métallocène utilisé présente l'aptitude à former essentiellement un homopolymère en présence d'hydrogène avec lesdites α-oléfines et présente, en outre, l'aptitude à former essentiellement un copolymère en l'absence d'hydrogène avec lesdites α-oléfines et présente un taux de terminaison différent constant par rapport à la polymérisation des oléfines en présence d'hydrogène ;
pour former un premier mélange de polymérisation comprenant un copolymère de poids moléculaire élevé de faible cristallinité ;
suivi par
(B) la mise en contact sous des conditions de polymérisation
(1) dudit premier mélange de polymérisation avec
(2) l'hydrogène ;
pour former un deuxième mélange de polymérisation comprenant un homopolymère de bas poids moléculaire de cristallinité élevée,
et ledit copolymère
caractérisé en ce que le procédé est mis en oeuvre de sorte que ledit copolymère présente une faible densité inférieure à 0,94 g par cm³ et ledit homopolymère obtenu en présence d'hydrogène a une densité élevée supérieure ou égale à 0,94 g par cm³.

2. Un procédé selon la revendication 1, dans lequel ledit métallocène est de titane et un métallocène d'au moins un autre desdits métaux est présent.

3. Un procédé selon la revendication 1 ou 2, dans lequel lesdites conditions de polymérisation comprennent des conditions de polymérisation de phase en suspension.

4. Un procédé selon la revendication 3, dans lequel lesdites conditions de polymérisation de phase en suspension comprennent une température de 80°C à 110°C.

5. Un procédé selon la revendication 3 ou 4, dans lequel lesdites conditions de polymérisation de phase en suspension comprennent une pression de 17,5.10⁵ à 49.10⁵ Pa (250 psia à 700 psia).

6. Un procédé selon l'une quelconque des revendications 3 à 5, dans lequel lesdites conditions de polymérisation de phase en suspension comprennent une durée de polymérisation de 1 minute à 6 heures.

7. Un procédé selon l'une quelconque des revendications précédentes, dans lequel au moins lesdites des deux α-oléfines différentes comprennent au moins deux de l'éthylène, du propylène, du 1-butène, du 3-méthyl-1-butène, du 1-pentène, du 3-méthyl-1-pentène, du 4-méthyl-1-pentène, du 1-hexène, du 3-éthyl-1-hexène, du 1-heptène, du 1-octène et du 1-décène.

8. Un procédé selon la revendication 7, dans lequel au moins deux desdites α-oléfines différentes sont l'éthylène et le 1-hexène.

9. Un procédé selon la revendication 8, dans lequel le premier mélange de polymérisation et l'hydrogène sont, en outre, mis en contact avec de l'éthylène supplémentaire.

10. Un procédé selon l'une quelconque des revendications précédentes, dans lequel le composé aluminoxane est le méthyl-aluminoxane.

11. Un procédé selon l'une quelconque des revendications précédentes, dans lequel le composé métallocène comprend le bis(cyclopentadiényl)-diméthyl-zirconium.

12. Un procédé selon la revendication 11, dans lequel le composé métallocène comprend, en outre le bis(cyclopentadiényl)-diméthyl-titane.
